# EUROPÄISCHE PATENTSCHRIFT

(11) **EP 1 788 261 B1**
(45) Veröffentlichungstag und Bekanntmachung des Hinweises auf die Patenterteilung: **02.07.2008**
(21) Anmeldenummer: 06023505.8
(22) Anmeldetag: 11.11.2006
(51) Int. Cl.: F16C 1/26, F16C 1/22

(54) **Einstellvorrichtung mit Verliersicherung**
Adjustment device with securing device
Dispositif de réglage antiperte

(30) Priorität: 22.11.2005 DE 102005055506
(43) Veröffentlichungstag der Anmeldung: 23.05.2007
(73) Patentinhaber: SRAM Deutschland GmbH, 97404 Schweinfurt (DE)
(72) Erfinder: Böhm, Robert, Dipl.-Ing., 97453 Mainberg (DE)

(56) Entgegenhaltungen:
- EP-A1- 0 774 590
- EP-A2- 0 727 349
- WO-A-20/04013501
- GB-A- 374 661
- US-A- 5 921 143
- US-A- 5 966 993

## Beschreibung

Die vorliegende Erfindung betrifft eine Einstellvorrichtung für Betätigungszüge, insbesondere an Fahrrädern, zum Betätigen der Bremsen oder zum Steuern von Fahrradgetrieben, gemäß dem Oberbegriff von Anspruch 1, siehe US-A-5 966 993.

Handbetätigte Fahrradbremsen und Schaltungen werden vom Lenker aus mittels Brems- oder Schalthebel betätigt, die über Seilzüge mit den Bremsen bzw. Schaltwerken verbunden sind. Die Seilzüge werden verschiebbar in Seilhüllen geführt. Zur Einstellung des Seilzuges befindet sich an mindestens einem Ende der Seilhülle eine Einstellvorrichtung.

In der EP 0 727 349 A2 wird eine Einstellvorrichtung für einen Bowdenzug gezeigt, der aus einem Seilzug und einer Seilhülle besteht, wobei der Seilzug aus der Hülle an beiden Enden herausragt. Die Einstellvorrichtung besteht aus einem Führungselement, einem Einstellelement, das in eine Gewindebohrung geschraubt wird, einer Schraubenfeder sowie einem Betätigungselement. Das Führungselement nimmt den Seilzug auf und bildet das Widerlager für die Seilhülle zur Abstützung der Betätigungskräfte. Das Führungselement stützt sich im Einstellelement ab, das, zur Längeneinstellung des Seilzuges, mit einem Schraubengewinde in eine entsprechende Gewindebohrung eines rahmenfesten Bauteiles geschraubt werden kann. Das Einstellelement ist über eine Mitnahmekontur drehfest mit dem Betätigungselement verbunden. Eine Schraubenfeder ist zwischen dem Betätigungselement und dem Einstellelement angeordnet und drückt das mit einer Rastkontur ausgestattete Betätigungselement zur Drehfixierung gegen eine entsprechende Gegenkontur am rahmenfesten Bauteil.

Der Vorteil dieser Einstellvorrichtung liegt in der, beim Verstellen des Einstellelementes, unveränderten Lage des Betätigungselementes. Allerdings verschiebt sich beim Verdrehen des Betätigungselementes der Austrittspunkt des Seilzuges aus dem Führungselement relativ zum rahmenfesten Bauteil, was gerade bei Seilzügen, die für die Schaltbetätigung eingesetzt werden, unerwünscht ist. Des Weiteren können das Betätigungselement und die Schraubenfeder beim Montieren der Einstellvorrichtung verloren gehen, da sie nur lose auf dem Einstellelement aufgesteckt sind.

Ausgehend vom Stand der Technik liegt der Erfindung die Aufgabe zugrunde, eine Einstellvorrichtung mit einem definierten Austrittspunkt für den Seilzug und mit einer Verliersicherung zu schaffen. Zudem soll die vorhandene Vorspannung des Seilzuges zum Andrücken der Rastkontur des Betätigungselementes an die Gegenkontur genutzt werden.

Die Lösung der Aufgabe wird gemäß den Merkmalen von Anspruch 1 realisiert.

Diese Einstellvorrichtung besteht aus einem Führungselement, einem Betätigungselement, einem Einstellelement und einem Gewindeeinsatz und ist so konzipiert, dass sie als vormontierte Baueinheit mit dem Führungselement fest in einem rahmenfesten Bauteil gehalten wird.

Das Einstellelement bildet das Widerlager für den Bowdenzug bzw. für die Seilhülle und hat eine Bohrung zur Durchführung des Seilzuges. Das Einstellelement hat zwei äußere Abschnitte mit unterschiedlichen Durchmessern. Der Abschnitt mit dem kleineren Außendurchmesser verfügt über ein Verstellgewinde, das mit einem im Betätigungselement festsitzenden Gewindeeinsatz zusammenwirkt, der durch Drehen des Betätigungselementes eine Längsverschiebung des Einstellelementes bewirkt. Damit sich das Einstellelement dabei nicht mitdreht, ist das Verstellgewinde abgeflacht und stützt sich an einer entsprechenden inneren Anlagefläche im Führungselement ab, das seinerseits mit einer äußeren Anlagekontur ausgestattet ist und verdrehfest in einem rahmenfesten Bauteil fixiert wird. Eine zusätzliche kraft- oder formschlüssige axiale Sicherung des Führungselementes wird durch Verpressen, Vernieten, mit Sicherungselementen oder ähnlichen Maßnahmen erreicht. Somit wird ein ortsfester und von der Position des Einstellelementes unabhängiger Austrittspunkt des Seilzuges aus dem Führungselement gewährleistet. Um eine ungehinderte Seilzugbewegung zu gewährleisten, ist die Seilzugbohrung im Führungselement auf beiden Seiten aufgeweitet.

Das Betätigungselement verfügt über eine griffige Außenkontur am Umfang und hat an der einen Stirnseite eine Rastkontur, die mit einer Gegenkontur am rahmenfesten Bauteil zusammenwirkt. Durch die Vorspannung des Seilzuges wird über die Seilhülle auf das Einstellelement und dem Gewindeeinsatz eine Andrückkraft in das Betätigungselement eingeleitet und die Rastkontur gegen die Gegenkontur gedrückt, wodurch eine unbeabsichtigte Verdrehung des Betätigungselementes unterbunden wird. Der Gewindeeinsatz sitzt fest im Betätigungselement und setzt die Drehbewegung des Betätigungselementes in eine Längsverschiebung des Einstellelementes um. Das Betätigungselement und das Führungselement weisen einen überlappenden Bereich auf, der von einem Bund am Führungselement und einem Absatz mit kleinem Durchmesser am Betätigungselement gebildet wird. Der hierdurch gebildete Freiraum zwischen Führungs- und Betätigungselement ermöglicht das Überspringen der Rastkontur bzw. die axiale Verschiebung und eine Drehbewegung des Betätigungselementes gegenüber dem rahmenfesten Bauteil. Das Führungselement wird mit Hilfe des festsitzenden Gewindeeinsatzes bereits im vormontierten Zustand verlierfrei am Betätigungselement gesichert. Hierzu hat das Führungselement am Ende einen Bund dessen Durchmesser größer ist als der kleinste Innendurchmesser des Betätigungselementes, wodurch das Führungselement im vormontierten Zustand der Einstellvorrichtung nicht verloren gehen kann. Bei der Vormontage der Einstellvorrichtung wird zuerst das Führungselement in das Betätigungselement eingelegt. Anschließend wird der Gewindeeinsatz in das Betätigungselement eingepresst und das Einstellelement eingeschraubt. Die Einstellvorrichtung wird durch axiale Sicherung des Führungselementes am rahmenfesten Bauteil montiert.

In einer weiteren Ausführung entfallen der Gewindeeinsatz und das Verstellgewinde am Abschnitt des Einstellelementes mit dem kleinen Durchmesser. Dafür befinden sich das Verstellgewinde am Abschnitt des Einstellelementes mit dem großen Durchmesser und ein entsprechendes Innengewinde im Bereich des größten Außendurchmessers am Betätigungselement. Ist das Einstellelement im Betätigungselement eingeschraubt, so kann das Führungselement ebenfalls nicht im vormontierten Zustand verloren gehen.

Die vorgeschlagene Einstellvorrichtung verzichtet auf eine Andrückfeder und bildet im vormontierten Zustand eine kompakte Baueinheit mit unverlierbaren Komponenten. Sie verbleibt auch im eingebauten Zustand, durch die axiale Fixierung des Führungselementes, noch nach der Demontage des Bowdenzuges komplett am rahmenfesten Bauteil. Der Seilaustrittspunkt wird durch die ortsfeste Seilaustrittsöffnung des Führungselementes stets konstant gehalten. Durch die drehfeste Anordnung des Einstellelementes, im ebenfalls drehfesten Führungselement, tritt auch keine Relativbewegung zwischen dem Widerlager im Einstellelement und der Seilhülle sowie dem Seilzug auf.

### Kurzbeschreibung der Zeichnungen

Die vorliegende Erfindung wird mit Bezug auf die beigefügten Zeichnungen detailliert beschrieben, wobei die Zeichnungen lediglich als nicht beschränkendes Beispiel anzusehen sind.
Fig. 1 zeigt eine Schnittdarstellung der Einstellvorrichtung
Fig. 2 zeigt die Komponenten der Einstellvorrichtung in einer Explosionsdarstellung

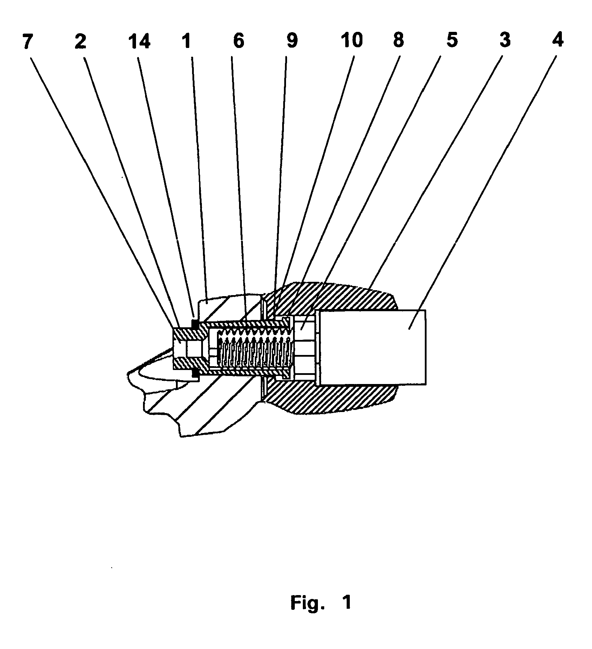

Figur 1 zeigt die Einstellvorrichtung im Schnitt mit einem rahmenfesten Bauteil 1, in dem das Führungselement 2 drehfest und axial fixiert ist. Hierzu ist das zylindrische Führungselement 2 seitlich abgeflacht. Das Betätigungselement 3 stützt sich am rahmenfesten Bauteil 1 ab und nimmt das Einstellelement 4 auf. Das Einstellelement 4 hat zwei Abschnitte mit unterschiedlichen Außen- und Innendurchmessern. Der erste Abschnitt, mit einem großen Außen- und Innendurchmesser, wird teilweise vom Betätigungselement 3 umschlossen und hat im innern ein Widerlager für die Seilhülle. Der zweite Abschnitt, mit einem kleinen Außendurchmesser, trägt ein Verstellgewinde 6 das in einen Gewindeeinsatz 5 eingeschraubt ist, und verfügt über eine Durchgangsbohrung für den Seilzug. Der zweite Abschnitt ist zur Bildung einer Verdrehsicherung an der Seite abgeflacht und wird im Führungselement 2 verdrehsicher geführt. Der Gewindeeinsatz 5 in Form einer Mutter ist im Betätigungselement 3 eingepresst und verschiebt bei einer Drehbewegung des Betätigungselementes 3 das Einstellelement 4 sowie die Seilhülse in Längsrichtung. Trotz einer Verschiebung des Einstellelementes 4 bleibt der Seilaustrittspunkt, auf Grund des im rahmenfesten Bauteil 1 drehfest angeordneten und mit einem Sicherungselement 14 axial gesicherten Führungselementes 2, konstant. Die Seilzugbohrung 7 im Führungselement 2 ist zur schonenden Seilführung auf beiden Seiten aufgeweitet. Damit das Führungselement 2 im vormontierten Zustand der Einstellvorrichtung und das Betätigungselement 3 im Einbauzustand, bei demontiertem Seilzug, nicht verloren gehen können, haben beide Bauteile einen überdeckenden Bereich. Hierzu ist an dem Führungselement 2 ein Bund 8 und am Betätigungselement 3 ein innen liegender Absatz 9 vorhanden. Der Außendurchmesser am Bund 8 des Führungselementes 2 ist größer als der Innendurchmesser am Absatz 9 des Betätigungselementes 3. Zwischen Bund 8 und Absatz 9 wird durch den axialen Abstand ein Freiraum 10 gebildet, der eine axiale Verschiebung des Betätigungselementes 3 erlaubt, wenn die Rastkontur an der Stirnseite des Betätigungselementes 3 beim Verstellvorgang gegenüber der entsprechenden Gegenkontur am rahmenfesten Bauteil 1 eine Relativbewegung ausführt.

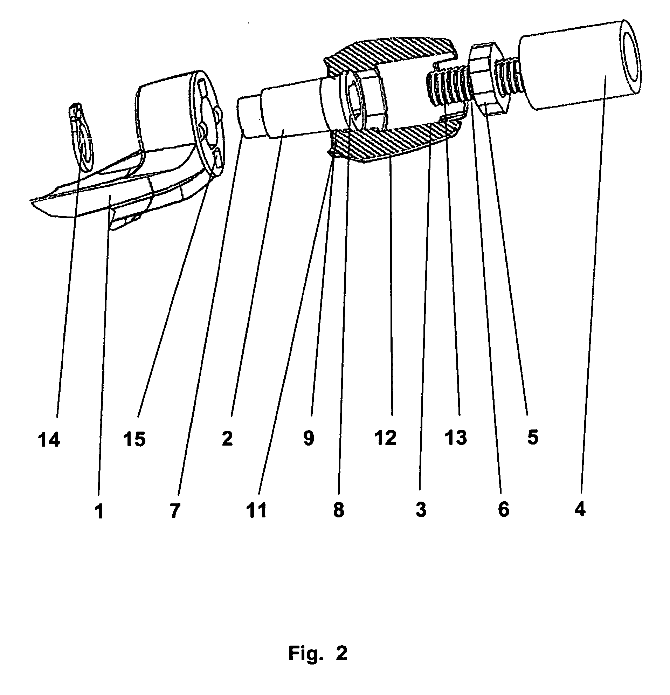

Figur 2 zeigt die Komponenten der Einstellvorrichtung in einer Explosionsdarstellung. Das Führungselement 2 ist das zentrale Bauteil der Einstellvorrichtung und ist mit einem Bund 8 einem mittleren Abschnitt und einem Endabschnitt mit einem kleinen Außendurchmesser ausgestattet. Der Bunddurchmesser ist größer als der Innendurchmesser am Absatz des Betätigungselementes 3, so dass zum einen das Führungselement 2 bei vormontierter Einstellvorrichtung, wenn das Einstellelement 4 eingeschraubt ist, nicht verloren gehen kann und damit zum anderen das Betätigungselement 3 mit dem darin eingeschraubten Einstellelement 4, bei demontiertem Bowdenzug verliersicher am Führungselement 2 und somit am rahmenfesten Bauteil 1 verbleibt. Die Außenkontur des mittleren Abschnittes ist zur Verdrehsicherung in einem Teilbereich abgeflacht und wirkt mit einer entsprechenden Gegenkontur im rahmenfesten Bauteil 1 zusammen. Im Endabschnitt verläuft die Seilzugbohrung 7. Das Führungselement 2 wird mit einem Sicherungselement 14, das am Endabschnitt des Führungselementes 2 angreift, am rahmenfesten Bauteil 1 axial fixiert. Das Betätigungselement 3 verfügt an der Stirnseite über eine Rastkontur 11, die mit einer entsprechenden Gegenfläche 15 am rahmenfesten Bauteil 1 zusammen wirkt. Beim Verstellvorgang wird das, über die Seilzugspannung in Richtung rahmenfestes Bauteil 1 vorgespannte, Betätigungselement 3 gedreht und die Rastkontur 11 gleitet über die Gegenfläche 15. Der dabei entstehende axiale Hub des Betätigungselementes 3 wird erst durch den Freiraum bzw. dem Abstand zwischen dem Bund 8 und dem Absatz 9 mit dem kleinen Innendurchmesser am Betätigungselement 3 ermöglicht. Die Außenkontur des Betätigungselementes 3 ist zur Verbesserung der Griffigkeit mit in Längsrichtung verlaufenden Griffleisten 12 ausgestattet. In das Betätigungselement 3 wird nach dem Einlegen des Führungselementes 2 ein Gewindeeinsatz 5 in Form einer Mutter eingepresst. Der Gewindeeinsatz 5 wirkt mit dem Verstellgewinde 6 am Einstellelement 4 zusammen und wandelt die Drehbewegung des Betätigungselementes 3 in eine axiale Verstellbewegung des Einstellelementes 4 um. Damit sich das Einstellelement 4 beim Verstellvorgang nicht mitdreht, ist der Absatz am Einstellelement 4 mit dem Verstellgewinde 6 abgeflacht. Mit dieser Abflachung 13 stützt sich das Einstellelement 4 an einer entsprechenden Kontur im innern des seinerseits im rahmenfesten Bauteil 1 gegen Verdrehung gesicherten Führungselements 2 ab. Somit ist gewährleistet, dass das Einstellelement 4 beim Einstellvorgang lediglich eine axiale Verschiebung ausführen kann.

In einer weiteren Ausführung des Einstellelementes 4 wird das Verstellgewinde 6 am Abschnitt mit dem großen Außendurchmesser angeordnet und das entsprechende Innengewinde befindet sich im Bereich des großen Innendurchmessers am Betätigungselement 3. Die Verdrehsicherung des Einstellelementes 4 wird durch eine aufeinander abgestimmte Querschnittsform des Einstellelementabschnittes mit dem kleinen radialen Außenmaß und des Abschnittes am Führungselement 2 mit dem großen radialen Innenmaß. Dadurch entfällt das Einpressen des Gewindeeinsatzes 5 in das Betätigungselement 3. Im vormontierten Zustand wird das Einstellelement 4 in das Betätigungselement 3 eingeschraubt und verhindert somit ein Herausfallen des Führungselementes 2.

### Bezugszeichenliste

- 1: Rahmenfestes Bauteil
- 2: Führungselement
- 3: Betätigungselement
- 4: Einstellelement
- 5: Gewindeeinsatz
- 6: Verstellgewinde
- 7: Seilzugbohrung
- 8: Bund
- 9: Absatz
- 10: Freiraum
- 11: Rastkontur
- 12: Griffleiste
- 13: Abflachung
- 14: Sicherungselement
- 15: Gegenfläche

## Patentansprüche

1. Einstellvorrichtung für Bowdenzüge mit einer Seilhülle sowie einem Seilzug, insbesondere an Fahrrädern zum Betätigen von Bremsen und Schaltungen bestehend aus
- einem Einstellelement (4) mit einem Widerlager für die Seilhülle,
- einer funktionell zwischen Einstellelement (4) und einem Betätigungselement (3) angeordneten Verstellgewinde (6)
- einem Führungselement (2) mit einer Seilzugbohrung (7), wobei das Führungselement (2) drehfest und axial gesichert in einem rahmenfesten Bauteil (1) angeordnet ist und das Einstellelement (4) drehfest aber verschiebbar im Führungselement (2) geführt wird und wobei die Drehbewegung des Betätigungselementes (3) über das am Betätigungselement (3) und am Einstellelement (4) angeordneten Verstellgewinde (6) in eine Längsbewegung des Einstellelementes (4) umgesetzt wird,
**dadurch gekennzeichnet, dass** das Betätigungselement (3) mit einer stirnseitigen Rastkontur (11) zum Eingriff mit dem rahmenfesten Bauteil (1) versehen ist.

2. Einstellvorrichtung nach Anspruch 1,
**dadurch gekennzeichnet,**
**dass** der Durchmesser am Bund (8) des Führungselementes (2) größer ist, als der Innendurchmesser am Absatz (9) des Betätigungselementes (3), wodurch beide Teile bei eingeschraubtem Einstellelement (4) verliersicher verbunden werden.

3. Einstellvorrichtung nach Anspruch 2,
**dadurch gekennzeichnet,**
**dass** der axiale Abstand, zwischen dem Bund (8) am Führungselement (2) und dem Absatz (9) am Betätigungselement (3), einen Freiraum (10) bildet, der eine, aus der Relativbewegung der Rastkontur (11) gegenüber einer entsprechenden Gegenfläche (15) entstehende, axiale Bewegung des Betätigungselementes (3) erlaubt.

4. Einstellvorrichtung nach Anspruch 1,
**dadurch gekennzeichnet,**
**dass** zum Verstellen des Einstellelementes (4) der Abschnitt mit dem größten Innendurchmesser am Betätigungselement (3) mit einem Innengewinde und der Abschnitt mit dem größten Außendurchmesser am Einstellelement (4) mit einem zum Innengewinde passenden Außengewinde ausgestattet ist.

5. Einstellvorrichtung nach Anspruch 1,
**dadurch gekennzeichnet,**
**dass** zum Verstellen des Einstellelementes (4) der Abschnitt mit dem kleinen Außendurchmesser am Einstellelement (4) mit einem Außengewinde ausgestattet ist und im Betätigungselement (3) ein entsprechender Gewindeeinsatz (5) bzw. eine zum Außengewinde passende Mutter fixiert ist.

6. Einstellvorrichtung nach Anspruch 1,
**dadurch gekennzeichnet,**
**dass** die Seilzugbohrung (7) im Führungselement (2) auf beiden Seiten aufgeweitet ist.

## Claims

1. Adjustment device for Bowden cables with a cable sheath and a cable pull, in particular on bicycles for actuating brakes and gear changing mechanisms, comprising
- an adjustment element (4) with an abutment for the cable sheath,
- an adjustment thread (6) arranged functionally between adjustment element (4) and an actuating element (3),
- a guide element (2) with a cable pull bore (7), wherein the guide element (2) is arranged in a rotationally fixed and axially secured manner in a component (1) fixed on the frame, and the adjustment element (4) is guided in a rotationally fixed but displaceable manner in the guide element (2), and wherein the rotational movement of the actuating element (3) is converted via the adjustment thread (6), which is arranged on the actuating element (3) and on the adjustment element (4), into a longitudinal movement of the adjustment element (4),
**characterized in that** the actuating element (3) is provided with an end-side latching contour (11) for engagement with the component (1) fixed on the frame.

2. Adjustment device according to Claim 1, **characterized in that** the diameter at the collar (8) of the guide element (2) is greater than the inside diameter at the step (9) of the actuating element (3), as a result of which both parts are connected captively when the adjustment element (4) is screwed in.

3. Adjustment device according to Claim 2, **characterized in that** the axial distance between the collar (8) on the guide element (2) and the step (9) on the actuating element (3) forms a clearance (10) which permits an axial movement of the actuating element (3), which movement is produced from the relative movement of the latching contour (11) in relation to a corresponding counter surface (15).

4. Adjustment device according to Claim 1, **characterized in that**, in order to adjust the adjustment element (4), the section with the largest inside diameter on the actuating element (3) is provided with an internal thread, and the section with the largest outside diameter on the adjustment element (4) is provided with an external thread matching the internal thread.

5. Adjustment device according to Claim 1, **characterized in that**, in order to adjust the adjustment element (4), the section with the small outside diameter on the adjustment element (4) is provided with an external thread, and a corresponding threaded insert (5) or a nut matching the external thread is fixed in the actuating element (3).

6. Adjustment device according to Claim 1, **characterized in that** the cable pull bore (7) is widened on both sides in the guide element (2).

## Revendications

1. Dispositif de réglage pour câbles sous gaines comportant une gaine de câble ainsi qu'un câble, en particulier pour l'actionnement de freins et de changements de vitesses sur des bicyclettes, constitué d'un élément de réglage (4) comportant une butée pour la gaine de câble, un filet d'ajustement (6) fonctionnel disposé entre l'élément de réglage (4) et un élément d'actionnement (3) et un élément de guidage (2) présentant un trou de passage de câble (7), l'élément de guidage (2) étant disposé de façon rigide en rotation et bloquée axialement dans un élément de construction (1) fixé à un cadre et l'élément de réglage (4) étant guidé de façon rigide en rotation mais de façon à pouvoir être déplacé dans l'élément de guidage (2) et le mouvement de rotation de l'élément d'actionnement (3) étant transformé en un mouvement longitudinal de l'élément de réglage (4) par l'intermédiaire du filet d'ajustement (6) disposé sur l'élément d'actionnement (3) et sur l'élément de réglage (4), **caractérisé en ce que** l'élément d'actionnement (3) est pourvu d'un contour cranté (11) du côté frontal destiné à s'engrener avec l'élément de construction (1) fixé à un cadre.

2. Dispositif de réglage selon la revendication 1, **caractérisé en ce que** le diamètre du collet (8) de l'élément de guidage (2) est plus grand que le diamètre intérieur de l'épaulement (9) de l'élément d'actionnement (3), de sorte que les deux parties soient reliées de façon protégée contre la perte lorsque l'élément de réglage (4) est en position vissée.

3. Dispositif de réglage selon la revendication 2, **caractérisé en ce que** la distance axiale entre le collet (8) de l'élément de guidage (2) et l'épaulement (9) de l'élément d'actionnement (3) forme un espace libre (10), lequel permet un mouvement axial de l'élément d'actionnement (3) suite au mouvement relatif du contour cranté (11) par rapport à une surface opposée (15) correspondante.

4. Dispositif de réglage selon la revendication 1, **caractérisé en ce que**, pour ajuster l'élément de réglage (4), le tronçon de l'élément d'actionnement (3) présentant le plus grand diamètre intérieur est pourvu d'un filet intérieur et le tronçon de l'élément de réglage (4) présentant le plus grand diamètre extérieur d'un filet extérieur adapté au filet intérieur.

5. Dispositif de réglage selon la revendication 1, **caractérisé en ce que**, pour ajuster l'élément de réglage (4), le tronçon de l'élément de réglage (4) présentant le petit diamètre extérieur est pourvu d'un filet extérieur et **en ce qu'**un insert fileté (5) correspondant ou selon le cas un écrou adapté au filet extérieur est fixé dans l'élément d'actionnement (3).

6. Dispositif de réglage selon la revendication 1, **caractérisé en ce que** le trou de passage de câble (7) dans l'élément de guidage (2) est évasé des deux côtés.
